Europäisches Patentamt

European Patent Office

Office européen des brevets

(19)

(11) Veröffentlichungsnummer: **0 065 128**
**B1**

(12) # EUROPÄISCHE PATENTSCHRIFT

(45) Veröffentlichungstag der Patentschrift:
18.03.87

(21) Anmeldenummer: 82103504.5

(22) Anmeldetag: 24.04.82

(51) Int. Cl.⁴: **G 01 K 3/08,** G 01 N 25/08,
G 21 C 17/02

(54) **Einrichtung zur Bestimmung der Sättigungstemperatur einer heissen, unter Druck stehenden Flüssigkeit und Schaltungsanordnung zur Überwachung des Abstandes zur Sättigungstemperatur und der Dampfbildung unter Verwendung dieser Einrichtung.**

(30) Priorität: 09.05.81 DE 3118535

(43) Veröffentlichungstag der Anmeldung:
24.11.82 Patentblatt 82/47

(45) Bekanntmachung des Hinweises auf die Patenterteilung:
18.03.87 Patentblatt 87/12

(84) Benannte Vertragsstaaten:
AT CH DE FR GB IT LI

(56) Entgegenhaltungen:
DE-A-3 113 697
DE-B-1 254 374
FR-A-2 470 381
FR-A-2 489 582
US-A-3 801 439

TOUTE L'ELECTRONIQUE, Nr. 433, Juni 1978, Seite 75. "Applications et circuits. Capteur de température différentiel avec système d'alarme"

(73) Patentinhaber: BROWN BOVERI REAKTOR GmbH,
Dudenstrasse 44, D-6800 Mannheim 1 (DE)

(72) Erfinder: Schemmel, Richard, Behring Strasse 4,
D-6837 St. Leon- Rot (DE)
Erfinder: Day, Bobby L., Haydnstrasse 22, D-6909
Walldorf (DE)

(74) Vertreter: Dahlmann, Gerhard, Dipl.- Ing., c/o
Brown Boveri & Cie., AG Zentralbereich ZPT/P
Postfach 351, D-6800 Mannheim (DE)

EP 0 065 128 B1

## Beschreibung

Die Erfindung betrifft Einrichtungen zur Bestimmung der Sättigungstemperatur einer heißen, unter Druck stehenden Flüssigkeit.

Auf verschiedenen Anwendungsgebieten, wie z.B. bei chemischen und kerntechnischen Anlagen, ist es von großer Bedeutung über den Zustand von heißen Flüssigkeiten bezüglich der Sättigungstemperetur, dem Temperaturabstand zur Sättigung und einer unerwünschten Dampfbildung genau Bescheid zu wissen.

Zur Erreichung dieses Ziels muß bisher der absolute Druck und die absolute Temperatur der Flüssigkeit gemessen und ausgewertet werden. Je nach der Art des zu überwachenden Anlagentyps sind Meßgeräte mit einem großen Meßbereich, deren Bandbreite z.B. über 100° C und 100 bar hinausgehen erforderlich Verschiedene Meßarten zusammen mit derartig großen Bandbreiten schaffen zwangsläufig Meßunsicherheiten, die als Aussage für die Steuerung und Sicherheit der eingangs genannten Anlagen nicht verwendbar sind. Umgebungseinflüsse der Meßwertumformer bringen weitere Ungenauigkeiten der Meßergebnisse. Eine zusätzliche Ungenauigkeit ergibt sich dadurch, daß die Sättigungstempertur seither nicht direkt ermittelt werden kann. Sie muß vielmehr unter Verwendung einer Sättigungskurve von den Flüssigkeitsdruckwerten abgeleitet werden.

Es ist daher die Aufgabe der Erfindung, eine Einrichtung zur direkten Messung der Sättigungstemperatur anzugeben, um von dieser Basis aus den Abstand zur Sättigungstemperatur und eine Dampfblasenbildung in der Flüssigkeit überwachen zu können.

Gelöst wird diese Aufgabe erfindungsgemäß dadurch, daß ein Heizelement, ein erster und ein zweiter Temperaturfühler von einem gemeinsamen Gehäuse umgeben sind, wobei der zweite Temperaturfühler in der Nähe des Heizelements vorgesehen oder in diesem integriert ist, daß das Gehäuse in die Flüssigkeit eingetaucht und mit wenigstens einer Öffnung versehen ist und daß außerhalb des Gehäuses ein dritter Temperaturfühler angeordnet ist.

Dabei macht man sich den physikalischen Grundsatz zu nutzen, daß Wasser nicht über seine Sättigungstemperatur erwärmt werden kann. So wird bei Zufuhr einer bestimmten Heizleistung innerhalb des Gehäuses Sättigungstemperatur herrschen. Weist die außerhalb des Gehäuses befindliche Flüssigkeit die gleiche Temperatur auf, so ist dort Sättigung eingetreten.

Die Größe der Temperaturdifferenz zwischen dem dem Heizelement zugeordneten ersten Temperaturfühler und dem weiter vom Heizelement entfernten aber ebenfalls innerhalb des Gehäuses angeordneten zweiten Temperaturfühler gibt eindeutig Aufschluß darüber, ob in dem Bereich des Heizelements und dadurch in der Umgebung des Detektors eine Dampfblase aufgetreten ist. Die Größe der Temperaturdifferenz zwischen dem innerhalb des Gehäuses angeordneten ersten Temperaturfühler und dem außerhalb des Gehäuses angeordneten dritten Temperaturfühler gibt Aufschluß darüber, ob die Flüssigkeit außerhalb des Gehäuses unterkühlt ist.

Eine andere Lösung der Aufgabe ist erfindungsgemäß dadurch gekennzeichnet, daß in einem von einer Rohrleitung auskragenden Rohrstummel ein Heizelement, ein erster und ein zweiter Temperaturfühler angeordnet sind, wobei der zweite Temperaturfühler in der Nähe des Heizelements angeordnet ist und daß innerhalb der Rohrleitung ein dritter Temperaturfühler vorgesehen ist.

Diese Lösung hat den Vorteil, daß die Fühler und das Heizelement in dem Rohrstummel und damit außerhalb des Flüssigkeitsstromes angeordnet sind und somit die Strömungsgeschwindigkeit bezüglich Abfuhr der zugeführten Wärme nicht beachtet werden muß.

Eine besondere Ausgestaltung sieht vor, daß das Heizelement eine die Mantelfläche des Rohrstummels teilweise umgebende Heizspirale ist. Dadurch ist das Heizelement zu Reparaturarbeiten leichter zugänglich.

Eine Schaltungsanordnung zur Überwachung des Temperaturabstandes zur Sättigung und der Dampfblasenbildung in einer derartigen Flüssigkeiten unter V.erwendung einer vorgehend angegebenen Einrichtung sieht vor, daß zur Bildung von Differenzwerten der dritte sowie der erste Temperaturfühler einerseits und der erste sowie der zweite Temperaturfühler andererseits gegeneinandergeschaltet und zwei Differenz-Temperaturmeßumformer nachgeschaltet sind und daß die Signale der Umformer in einem Summierverstärker zusammenführbar sind, der mit einem Anzeige- und/oder Kontrollgerät verbunden ist.

Gemäß einer weiteren Ausgestaltung der Schaltungsanordnung ist zur Überwachung des Arbeitsbereichs des ersten Temperaturfühlers derselbe über einen Temperaturmeßumformer und einen analogen Schalter mit einem Sättigungstemperaturanzeiger verbunder, der abhängig von den Signalen der Differenztemperaturmeßumformer zur Anzeige freigegeben ist.

Eine vorteilhafte Ausbildung sieht vor, daß in Abhängigkeit des Differenzwertes zwischen dem ersten Temperaturfühler und dem dritten Temperaturfühler die Leistung des Heizelements regelbar ist. Mit dieser Maßnahme wird die Meßeinrichtung auf eine andere Strömungsgeschwindigkeit der das Gehäuse umgebenden Flüssigkeit eingestellt.

Anhand der Figuren 1-7 und verschiedener Ausführungsbeispielen wird die Einrichtung und die zugehörige Schaltungsanordnung beschrieben. Als Anwendungsbeispiel wird das Primärkühlmittel einer wassergekühlten Kernreaktoranlage gewählt. Dabei zeigen

Fig. 1, 2 und 3 verschiedene Ausbildungen der Einrichtung.

Fig. 4 und 4a eine andere Ausgestaltung der Einrichtung,

Fig. 5 ein Schaubild zur Verdeutlichung der Funktion der Einrichtung,

Fig. 6 eine Schaltungsanordnung mit in einem Heizelement konstanter Leistung integriertem Temperaturfühler und

Fig. 7 eine Schaltungsanordnung mit in der Nähe eines Heizelements variabler Leistung angeordnetem Temperaturfühler.

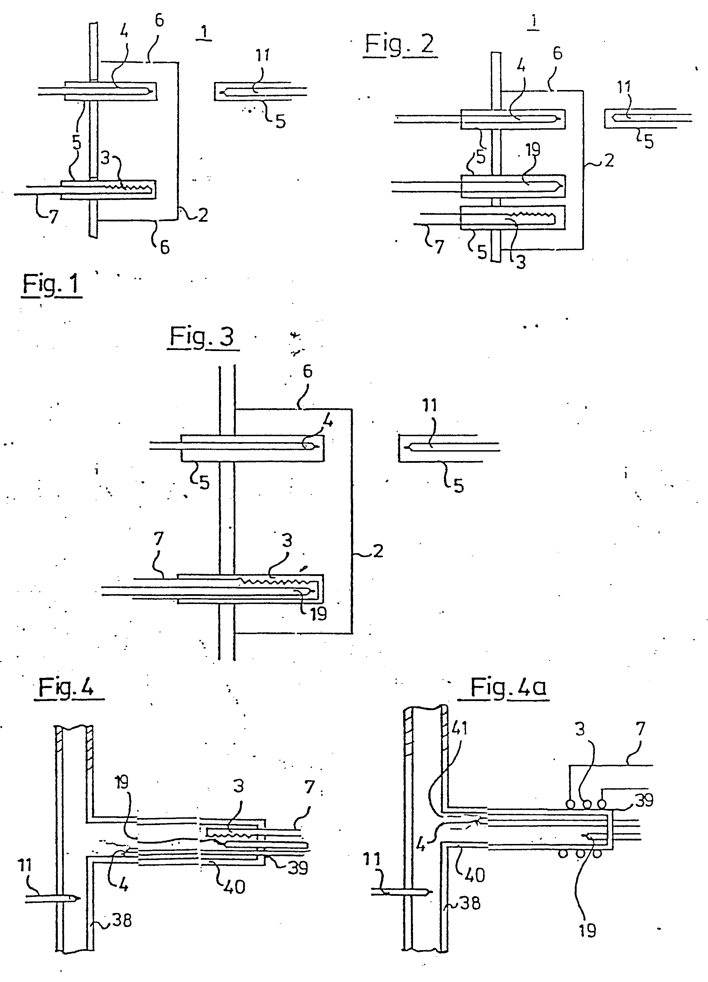

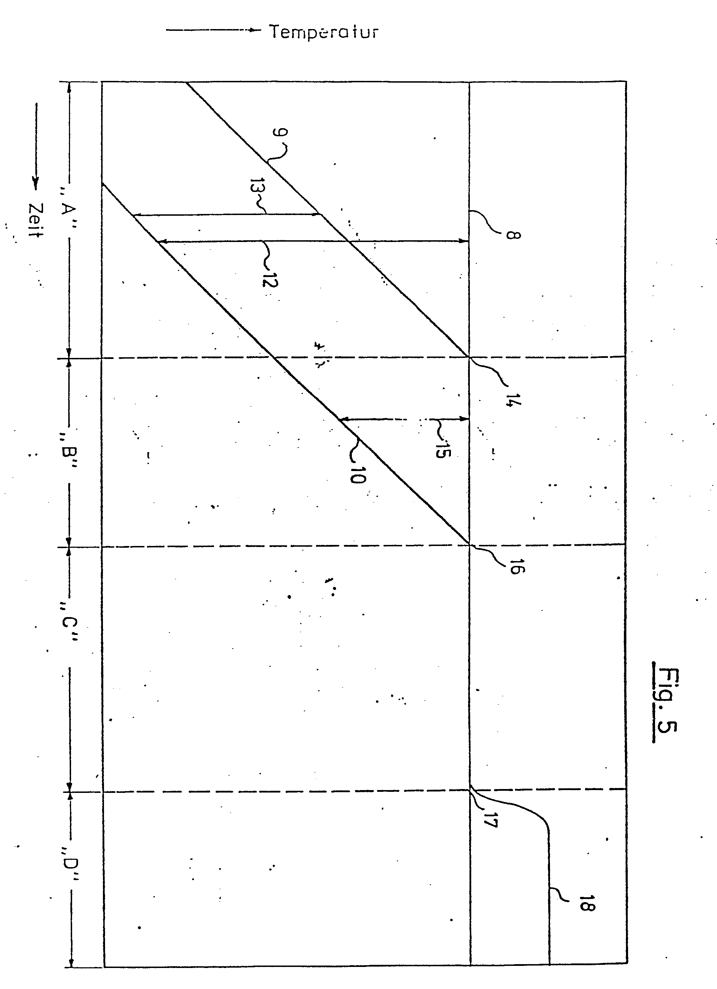

In das Kühlmittel 1 einer nicht weiter dargestellten Kernreaktoranlage ragt gem. Fig. 1 ein Gehäuse 2 in dessen Innenraum ein Heizelement 3 und ein Temperaturfühler 4 angeordnet ist. Das Heizelement und der Temperaturfühler 4 ist jeweils von einem Schutzmantel 5 umgeben. Damit Kühlmittel in das Innere des Gehäuses gelangen und sich innerhalb desselben der gleiche Druck aufbauen kann wie außerhalb, weist das Gehäuse zwei Öffnungen 6 auf. Wird dem Heizelement über die elektrische Zuleitung 7 Wärme zugeführt, so wird innerhalb des Gehäuses eine höhere Temperatur herrschen als außerhalb desselben. Ändert sich die Temperatur außerhalb des Gehäuses so wird sie sich entsprechend auch innerhalb des Gehäuses ändern. Die Temperaturdifferenz (Delta T) bleibt jedoch solange gleich wie der Temperaturabstand zur Sättigungstemperatur größer ist als diese Temperaturdifferenz Delta T. Das Schaubild gemäß Fig. 5 zeigt im Bereich "A" diesen Vorgang. Dabei soll die Linie 8 den Sättigungstemperaturwert des Kühlmittels darstellen. Die Schräge 9 verdeutlicht den Verlauf der innerhalb des Gehäuses vom Temperaturfühler 4 gemessenen Temperatur und die Schräge 10 den Verlauf der Kühlmitteltemperatur die vom außerhalb des Gehäuses angeordneten Temperaturfühler 11 ermittelt wird. Die Strecke 12 stellt den Abstand zum Sättigungstemperaturwert der Linie 8 dar und zeigt deutlich, daß sie größer ist als die Strecke 13, welche das Delta T zwischen den Temperaturfühlern 4, 11 darstellt. Beim Schnittpunkt 14 der Schräge 9 mit der Linie 8 ist Sättigungstemperatur innerhalb des Gehäuses 2 eingetreten.

Bei konstanter Heizleistung, die natürlich der Größe des Gehäuses und der Strömungsgeschwindigkeit des Kühlmittels angepaßt ist, steigt die Temperatur innerhalb des Gehäuses nicht weiter an, da Wasser nicht über seine Sättigungstemperatur erwärmt werden kann. Sobald die Schräge 10 in den Bereich "B" des Schaubildes der Fig. 5 eintritt wird bei steigender Temperatur des das Gehäuse umgebenden Kühlmittels 1 das Delta T kleiner als das Delta T im Bereich "A" des Schaubildes. Das Delta T im Bereich "B" ist nunmehr gleich dem Abstand zur Sättigungstemperatur des Kühlmittels und wird durch die Strecke 15 angedeutet. Es wird immer kleiner, bis beim Schnittpunkt 16 der Schräge 10 mit der Linie 8 das Kühlmittel die Sättigungstemperatur erreicht hat und das Delta T gleich Null ist. Das Delta T bleibt solange Null (Bereich "C" des Schaubildes) bis entweder das Heizelement 3 nicht mehr wasserbedeckt ist und nach Passieren des Schnittpunkts 17 in den Bereich "D" eintritt (Kurve 18), was einer Dampf- oder Dampfblasenbildung im Kühlmittel entspricht, oder das Kühlmittel abkühlt und wieder in den Bereich "B" gelangt.

Damit das Ansteigen des Delta T nach Erreichen der Sättigungstemperatur durch das Kühlmittel (Delta T = Null) eindeutig als erwünschte Abkühlung des Kühlmittels oder gefährliche Dampfbildung identifiziert werden kann, weisen die Ausbildungen der Einrichtung gemäß Fig. 2 und 3 einen weiteren Temperaturfühler 19 auf. Er ist entweder in der Nähe des Heizelements (Fig. 2) oder innerhalb des Schutzmantels 5 des Heizelements (Fig. 3) angeordnet. Mit dieser Ausbildung ist es möglich die Differenz zwischen der Temperatur in der Nähe des Heizelements und derjenigen des vom Heizelement (3) weiter entfernt angeordnetem Temperaturfühlers 4 zu bestimmen. Bildet sich eine Dampfblase im Bereich des Gehäuses so wird sich auch das Gehäuse selbst entleeren. Da die Wärmeleitfähigkeit von Dampf kleiner ist als diejenige von Wasser, wird die Differenz zwischen dem Temperaturfühler 4 und dem dem Heizelement zugeordneten Temperaturfühler 19 größer sein als bei einem wassergefüllten Gehäuse.

Die Fig. 4 zeigt eine Einrichtung bei der ein von einer das Kühlmittel führenden Rohrleitung 38 auskragender, ein geschlossenes Ende 39 aufweisender Rohrstummel 40 vorgesehen ist. Innerhalb des Rohrstummels sind zwei Temperaturfühler 19, 4 und ein Heizelement 3 angeordnet. Der Temperaturfühler 19 befindet sich in der Nähe des Heizelements 3 und dient im Vergleich mit dem weiter vom Heizelement (3) entfernt liegenden Temperaturfühler 4 zur Feststellung einer Dampfbildung. Die Temperatur des Fühlers 4 dient zur Feststellung der Sättigungstemperatur und der Vergleich der Meßwerte von Temperaturfühler 4 und des in der Rohrleitung 38 eingebauten Temperaturfühlers 11 zur Ermittlung des Sättigungstemperaturabstandes. Der Temperaturfühler 4 ist soweit von der Zutrittsöffnung 41 entfernt, daß der Einfluß der Temperatur des in der Leitung 38 fließenden Kühlmittels auf seine Meßwert gering ist. Dabei übernimmt der Rohrstummel 40 die Funktion des Gehäuses 2 ohne daß er in das Kühlmittel eingetaucht ist. Der Vergleich mit dem restlichen Kühlmittel wird durch den in die Rohrleitung 38 ragenden Fühler 11 herbeigeführt.

Gemäß der Ausbildung nach Fig. 4a ist aus Platzgründen und zum Zwecke der besseren Zugänglichkeit das Heizelement 3 als Heizspirale ausgebildet und umgibt dabei ein Teil des Rohrstummelmantels. Das Heizelement ist auch bei dieser Ausgestaltung dem Temperaturfühler 19 näher zugeordnet als dem Temperaturfühler 4.

Das Heizelement und die Temperaturfühler nach Fig. 4 und 4a können selbstverständlich auch mit einem Schutzmantel 5 umgeben sein. Außerdem ist die integrierte Anordnung von Heizelement 3 und Temperaturfühler 19 möglich.

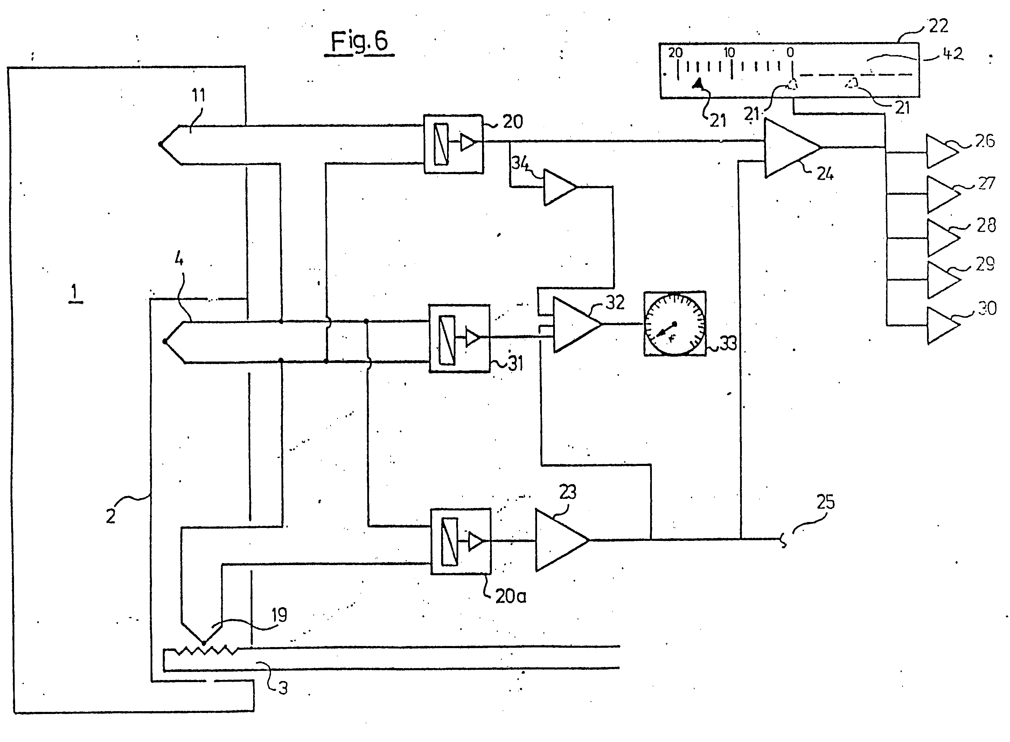

Die Fig. 6 zeigt eine Schaltungsanordnung zur Überwachung des Abstandes zur Sättigungstemperatur und der Dampfblasenbildung unter Verwendung einer vorgehend beschriebenen Einrichtung. Dabei wird das Heizelement 3 mit einer konstanten Heizleistung beaufschlagt und der Temperaturfühler 19 ist innerhalb des Schutzmantels 5 des Heizelements integriert. Das Kühlmittel 1 der nichtdargestellten Kernreaktoranlage ist nur andeutungsweise dargestellt. Ein Differenztemperaturmeßumformer 20 liefert ein analoges Signal, das umgekehrt proportional zur Differenz aus den Meßwerten des außerhalb des Gehäuses 2 angeordneten Temperaturfühlers 11 und des Temperaturfühlers 4 ist. Bei Delta T gleich Null gemäß Bereich "C" aus Fig. 5 entsteht das stärkste Signal und treibt den Zeiger 21 in die Stellung "0" (gestrichelt dargestellter Zeiger) des Anzeigegerätes 22 und zeigt somit an, daß das Kühlmittel die Sättigungstemperatur erreicht hat. Ein Signal entsprechend einem Delta T gemäß Bereich "B" aus Fig. 5 treibt den Zeiger 21 lediglich in den Abstandsbereich zur Sättigungstemperatur, der in dem Beispiel zwischen 0 und 20° liegen kann.

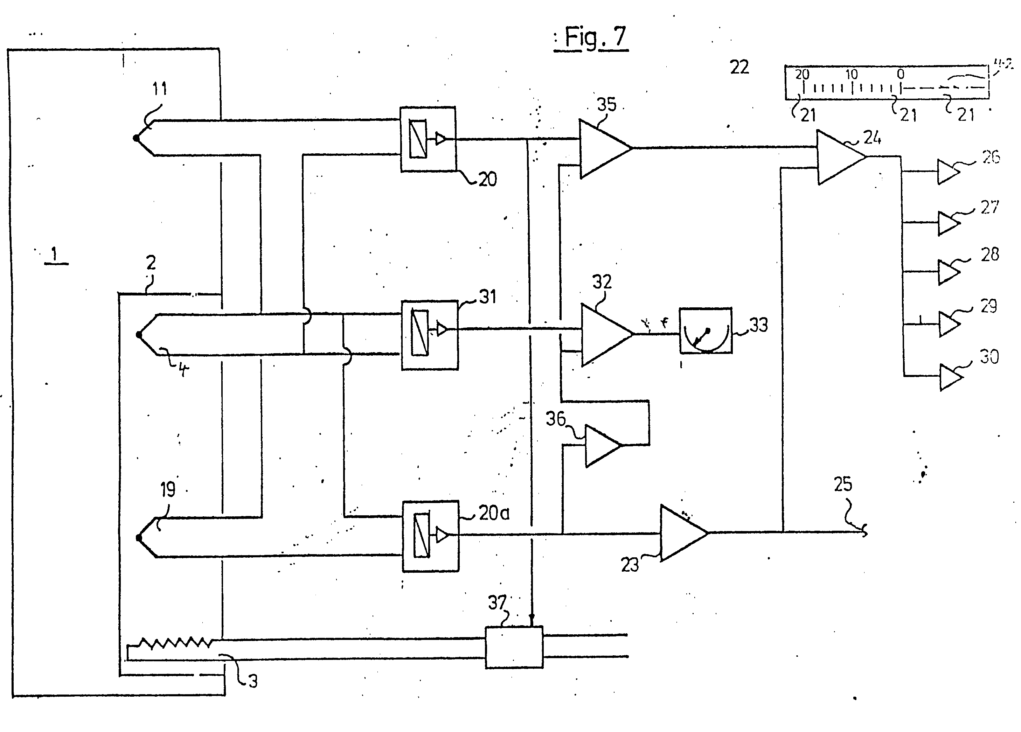

Ein anderer Differenztemperaturmeßumformer 20a liefert ein der Differenz des im Schutzmantel des Heizelements 3 integrierten Temperaturfühlers 19 und des Temperaturfühlers 4 proportionales Signal. Ein nachgeschalteter Grenzwertgeber 23 überprüft, ob die Temperaturdifferenz eine Dampfbildung oder Wasser innerhalb des Gehäuses 2 anzeigt. Bei Dampfanzeige wird das Signal dem Summierverstärker 24 zugeleitet und dem dort eingehenden Sättigungsabstandssignal aufgeschaltet. Die Addierung der beiden Signale treibt den Zeiger in den Bereich 42 "Dampfbildung". Unabhängig davon bewirkt das Dampfbildungssignal des Grenzwertgebers 23 das Auslösen einer Alarmvorrichtung 25. Dem Summierverstärker 24 sind als Kontrollgeräte Sicherheitsschaltungen 26, 27, 28, 29, 30 nachgeordnet. die nach dem Auftreten bestimmter Abstandswerte zur Sättigungstemperatur, der Sättigungstemperatur selbst oder einer Dampfbildung bestimmte Regelfunktionen der Kernreaktoranlage ansteuern. Somit werden rechtzeitig Gegenmaßnahmen eingeleitet, die schädliche Einwirkungen auf die Anlage ausschließen. Der Temperaturfühler 4 ist über einen Temperaturmeßumformer 31 und einem analogen Schalter 32 mit einem Sättigungstemperaturanzeiger 33 verbunden. Die Anzeige ist jedoch nur freigegeben, wenn der Grenzwertgeber 34, der das Signal des Differenztemperaturmeßumformers 20 überprüft bestätigt, daß die Einrichtung bereits ihren Funktionsbereich (Bereich "B" und "C" aus Fig. 5) erreicht und der Grenzwertgeber 23 über seine Verbindungsleitung signalisiert, daß keine Dampfbildung vorliegt. Die Fig. 7 verwendet gegenüber der nach Fig. 6 beschriebenen Ausführung ein in der Leistung variierbares Heizelement das durch einen in seiner Nähe angeordneten Temperaturfühler 19 indirekt überwacht wird (Fig. 2). Der Differenztemperaturmeßumformer 20 liefert ein Signal, das umgekehrt proportional zur Differenz aus den Meßwerten des außerhalb des Gehäuses 2 angeordneten Temperaturfühlers 11 und des Sättigungstemperaturfühlers 4 ist. Das Signal gelangt nur dann zum Anzeigegerät 22 wenn der analoge Schalter 35 bestätigt, daß der Temperaturfühler 4 innerhalb seines Funktionsbereichs liegt. Der Differenztemperaturmeßumformer 20a liefert ein proportionales Signal der Differenz aus den Werten der Temperaturfühler 4 und 19. Ein Wert, der eine Dampfbildung signalisiert gelangt in gleicher Weise durch den Grenzwertgeber 23, zur Alarmvorrichtung 25, zum Summierverstärker 24 und zu der Anzeigevorrichtung 22 oder den als Kontrollgeräte wirkenden Sicherheitsschaltungen 26, 27, 28, 29, 30 wie bei der Ausführung nach Fig. 6.

Ist die Temperaturdifferenz zwischen den Fühlern 4 und 19 gleich Null, so bedeutet dies, daß innerhalb des Gehäuses Sättigungstemperatur erreicht ist. Dieses Signal wertet der Grenzwertgeber 36 aus und signalisiert den analogen Schaltern 32 und 35, daß die über den Temperaturmeßumformer hereingegebene Sättigungstemperatur an den Sättigungstemperaturanzeiger 33 weitergegeben werden kann.

Damit bei der Eichung der Einrichtung die Strömungsgeschwindigkeit des Kühlmittels und somit der Wärmeübergang von Gehäuse an das Kühlmittel nicht berücksichtigt werden muß ist eine variable Leistung des Heizelements in Abhängigkeit des Differenztemperaturmeßumformers 20 regelbar. Die Kontrolleinrichtung 37 ist hierzu mit dem Differenztemperaturmeßumformer 20 verbunden.

Für die Einrichtung nach Fig. 4, 4a läßt sich sinngemäß die Schaltungsanordnung nach Fig. 5 und 7 einsetzen.

Mit den vorgeschlagenen Einrichtungen zur Sättigungstemperaturermittlung lassen sich auf einfache Weise präzise Meßwerte zur Ermittlung des Abstandes zur Sättigungstemperatur und der Dampfbildung in einer heißen, unter Druck stehenden Flüssigkeit ermitteln.

**Patentansprüche**

1. Einrichtung zur Bestimmung der Sättigungstemperatur einer heißen, unter Druck stehenden Flüssigkeit (1), <u>dadurch</u>

gekennzeichnet, daß ein Heizelement (3), ein erster Temperaturfühler (4) und ein zweiter Temperaturfühler (19) von einem gemeinsamen Gehäuse (2) umgeben sind, wobei der zweite Temperaturfühler (19) in der Nähe des Heizelementes (3) vorgesehen oder in diesem integriert ist, daß das Gehäuse (1) in die Flüssigkeit (1) eingetaucht und mit wenigstens einer Öffnung (6) versehen ist und daß außerhalb des Gehäuses ein dritter Temperaturfühler (11) angeordnet ist.

2. Einrichtung zur Bestimmung der Sättigungstemperatur einer heißen, unter Druck stehenden Flüssigkeit, dadurch gekennzeichnet, daß in einem von einer Rohrleitung (38) auskragenden Rohrstummel (40) ein Heizelement (3), ein erster Temperaturfühler (4) und ein zweiter Temperaturfühler (19) angeordnet sind, wobei der zweite Temperaturfühler (19) in der Nähe des Heizelementes (3) angeordnet ist, und daß innerhalb der Rohrleitung (38) ein dritter Temperaturfühler (11) vorgesehen ist.

3. Einrichtung nach Anspruch 2, dadurch gekennzeichnet, daß das Heizelement (3) eine die Mantelfläche des Rohrstummels (40) teilweise umgebende Heizspirale ist.

4. Schaltungsanordnung zur Überwachung des Abstandes zur Sättigungstemperatur und der Dampfblasenbildung in einer heißen, unter Druck stehenden Flüssigkeit unter Verwendung der Einrichtung nach einem der Ansprüche 1 bis 3, dadurch gekennzeichnet, daß zur Bildung von Differenzwerten der dritte Temperaturfühler (15) sowie der erste Temperaturfühler (4) einerseits und der erste Temperaturfühler (4) sowie der zweite Temperaturfühler (19) andererseits gegeneinander geschaltet und zwei Differenztemperaturmeßumformer (20, 20a) nachgeschaltet sind und daß die Signale dieser Umformer (20, 20a) in einem Summierverstärker (24) zusammenführbar sind, der mit einem Anzeige - (22) und/oder Kontrollgerät (26 bis 30) verbunden ist.

5. Schaltungsanordnung nach Anspruch 4, dadurch gekennzeichnet, daß der erste Temperaturfühler (4) über einen Temperaturmeßumformer (31) und einen analogen Schalter (32) mit einem Sättigungstemperaturanzeiger (33) verbunden ist, der abhängig von den Signalen der Differenztemperaturmeßumformer (20, 20a) zur Anzeige freigebbar ist.

6. Schaltungsanordnung nach Anspruch 4 oder 5, dadurch gekennzeichnet, daß in Abhängigkeit des Differenzwertes zwischen dem ersten Temperaturfühler (4) und dem dritten Temperaturfühler (11) die Leistung des Heizelementes (3) regelbar ist.

## Claims

1. Device for determination of the saturation temperature of a hot, pressurized liquid (1), characterized in that a heating element (3), a first temperature sensor (4) and a second temperature sensor (19) are surrounded by a common housing (2), the second temperature sensor (19) being provided in the vicinity of the heating element (3) or integrated in it, in that the housing dips into the liquid (1) and is provided with at least one opening (6) and in that a third temperature sensor (11) is arranged outside the housing.

2. Device for determination of the saturation temperature of a hot, pressurized liquid, characterized in that a heating element (3), a first temperature sensor (4) and a second temperature sensor (19) are arranged in a piece of pipe (40) jutting out from a pipeline (38), the second temperature sensor (19) being arranged in the vicinity of the heating element (3), and in that a third temperature sensor (11) is provided within the pipeline (38).

3. Device according to claim 2, characterized in that the heating element (3) is a heating spiral partially surrounding the surface area of the piece of pipe (40).

4. Circuit arrangement for monitoring the proximity to saturation temperature and the formation of vapour bubbles in a hot, pressurized liquid using the device according to one of claims 1 to 3, characterized in that, for the formation of difference values, the third temperature sensor (15) and the first temperature sensor (4) are connected to each other on the one hand and the first temperature sensor (4) and the second temperature sensor (19) are connected to each other on the other hand and two differential temperature measuring transducers (20, 20a) are connected downstream and in that the signals of these transducers (20, 20a) can be brought together in a summing amplifier (24), which is connected to a display (22) and/or control device (26 to 30).

5. Circuit arrangement according to claim 4, characterized in that the first temperature sensor (4) is connected via a temperature measuring transducer (31) and an analog switch (32) to a saturation temperature display (33), which can be released for display dependent on the signals of the differential temperature measuring transducers (20, 20a).

6. Circuit arrangement according to claim 4 or 5, characterized in that the power of the heating element (3) can be controlled dependent on the differential value between the first temperature sensor (4) and the third temperature sensor (11).

## Revendications

Dispositif pour déterminer la température de saturation d'un liquide chaud (1) sous pression, caractérisé par le fait qu'un élément chauffant (3), une première sonde pyrométrique (4) et une deuxième sonde pyrométrique (19) sont entourées par une enceinte commune (2), la deuxième sonde pyrométrique (19) étant prévue à

**0 065 128**

proximité de l'élément chauffant (3) ou intégrée à celui-ci, que l'enceinte (2) est plongée dans le liquide (1) et est munie d'au moins un orifice (6) et qu'une troisième sonde pyrométrique (11) est installée à l'extérieur de l'enceinte.

2. Dispositif pour déterminer la température de saturation d'un liquide sous pression, caractérisé par le fait qu'un élément chauffant (3), une première sonde pyrométrique (4) et une deuxième sonde pyrométrique (19) sont installés dans un bout de tube (40) faisant saillie en dehors d'une conduite tubulaire (38), la deuxième sonde pyrométrique (19) étant placée à proximité de l'élément chauffant (3) et qu'une troisième sonde pyrométrique (11) est prévue à l'intérieur de la conduite tubulaire (38).

3. Dispositif selon la revendication 2, caractérisé par le fait que l'élément chauffant (3) est un filament de chauffage entourant partiellement la surface latérale du bout de tube (40).

4. Montage pour surveiller l'écart par rapport à la température de saturation et la formation de bulles de vapeur dans un liquide chaud sous pression avec emploi du dispositif selon l'une des revendications 1 à 3, caractérisé par le fait que pour la formation des valeurs différentielles, la troisième sonde pyrométrique (11) ainsi que la première sonde pyrométrique (4), d'une part, et la première sonde pyrométrique (4) ainsi que la deuxième sonde pyrométrique (19), d'autre part, sont mutuellement raccordées, aux deux convertisseurs de mesure des températures différentielles (20, 20a) sont montés en aval et que les signaux de ces transformateurs (20, 20a) sont réunis dans un amplificateur totalisateur (24) qui est raccordé à un appareil d'affichage (22) et/ou de contrôle (26 à 30).

5. Montage selon la revendication 4, caractérisé par le fait que la première sonde pyrométrique (4) est raccordée par un convertisseur de mesure des températures (31) et un commutateur analogique (32) à un indicateur de température de saturation (33) qui est autorisé à afficher en fonction des signaux des convertisseurs de mesure des températures différentielles (20, 20a).

6. Montage selon la revendication 4 ou 5, caractérisé par le fait que la puissance de l'élément chauffant (3) peut être réglée en fonction de la valeur différentielle entre la première sonde pyrométrique (4) et la troisième sonde pyrométrique (11).

Fig. 1

Fig. 2

Fig. 3

Fig. 4

Fig. 4a

**0 065 128**

3

**Fig. 5**

Zeit

Temperatur

## Fig. 6

0 065 128

Fig. 7

0 065 128